# EUROPÄISCHE PATENTSCHRIFT

(11) **EP 2 697 532 B1**
(45) Veröffentlichungstag und Bekanntmachung des Hinweises auf die Patenterteilung: **07.06.2017**
(21) Anmeldenummer: 12715594.3
(22) Anmeldetag: 05.04.2012
(51) Int. Cl.: F16D 55/2265, F16D 55/227

(54) **BOLZENFÜHRUNGSEINRICHTUNG FÜR EINE SCHWIMMSATTEL-SCHEIBENBREMSE UND ENTSPRECHENDE SCHWIMMSATTEL-SCHEIBENBREMSE**
BOLT GUIDING DEVICE FOR A FLOATING CALIPER DISC BRAKE AND CORRESPONDING FLOATING CALIPER DISC BRAKE
DISPOSITIF DE GUIDAGE À BROCHE POUR UN FREIN À DISQUE À ÉTRIER FLOTTANT ET FREIN À DISQUE À ÉTRIER FLOTTANT CORRESPONDANT

(30) Priorität: 15.04.2011 DE 102011017220
(43) Veröffentlichungstag der Anmeldung: 19.02.2014
(73) Patentinhaber: Lucas Automotive GmbH, 56070 Koblenz (DE)
(72) Erfinder: BECKER, Marco, 56651 Oberdürenbach (DE); ZENZEN, Guido, 56290 Macken (DE); DANG, Nong, 56072 Koblenz (DE); HEES, Dirk, 56727 Kürrenberg (DE); BRAND, Georg, 56729 Nachtsheim (DE); DEBUS, Dirk, 56340 Dachsenhausen (DE)
(74) Vertreter: Thum, Bernhard
(86) Internationale Anmeldenummer: PCT/EP2012/001527
(87) Internationale Veröffentlichungsnummer: WO 2012/139739

(56) Entgegenhaltungen:
- WO-A1-2009/050751
- WO-A1-2010/054918
- DE-A1- 3 324 385

## Beschreibung

Die vorliegende Erfindung betrifft eine Bolzenführungseinrichtung für eine Schwimmsattel-Scheibenbremse mit wenigstens einem in einem Bremsträger gelagerten Führungsbolzen, der an einem Bremssattel angebracht ist, wobei der Bremssattel über den Führungsbolzen in dessen Achsrichtung verlagerbar geführt ist, wobei die Bolzenführungseinrichtung zwischen einer Innenumfangsfläche einer Aufnahmeöffnung des Bremsträgers und einer Außenumfangsfläche des darin aufgenommenen Führungsbolzens angeordnet ist, wobei die Bolzenführungseinrichtung eine Gleitbuchse umfasst, wobei eine Fläche von Innenumfangsfläche und Außenumfangsfläche als Haltefläche wirkt, an der die Gleitbuchse gehalten ist, und wobei die andere Fläche von Innenumfangsfläche und Außenumfangsfläche als Gleitfläche wirkt, an der die Gleitbuchse abgleitet.

Eine derartige Bolzenführungseinrichtung ist aus dem Stand der Technik bekannt. Hierzu wird verwiesen auf das Dokument DE 103 41 095 A1, bei dem in den Bremssattel eine Lagerhülse eingesetzt ist, die eine Gleitbuchse aufnimmt. Die Gleitbuchse ist sozusagen fest im Bremssattel fixiert. Die Gleitbuchse weist mehrere in Umfangsrichtung verlaufende Radialnuten auf, die jeweils von an einem Führungsbolzen satt anliegenden Führungsflächen umgeben sind. Es hat sich aber gezeigt, dass bei dieser Anordnung insbesondere dann, wenn das Fahrzeug längere Zeit steht, bei Betätigung der Bremse zunächst eine relativ hohe Haftreibung überwunden werden muss, bevor der Bremssattel bewegt werden kann. Dies führt dazu, dass in einer solchen Situation zunächst relativ große Betätigungskräfte aufgebracht werden müssen, um den Bremssattel überhaupt bremswirksam zu bewegen. Nach Überwindung der Haftreibung führen diese relativ großen Betätigungskräfte aber zu einer unerwartet starken Bremswirkung. Man spricht in diesem Zusammenhang von relativ großen "Losbrechmomenten". Dies kann vom Fahrer als störend empfunden werden.

Das Dokument DE 10 2006 053 183 A1 beschreibt eine Lösung, bei der eine Gleitbuchse ähnlicher Ausgestaltung unmittelbar auf dem Führungsbolzen aufgebracht ist. Diese Gleitbuchse weist anstelle einer in Umfangsrichtung verlaufenden Radialnut eine Reihe von helixabschnittförmigen Nuten auf, zwischen denen ebenfalls helixabschnittförmige Gleitflächen angeordnet sind. Auch diese Lösung hat den Nachteil relativ großer Führungsflächen, die dann, wenn ein Fahrzeug längere Zeit unbenützt war, zu den oben beschriebenen hohen Losbrechmomenten mit der nachteiligen Wirkung unerwartet großer Bremswirkungen führt.

Ferner beschreibt das Dokument DE 10 2007 053 902 A1 eine Lösung, bei der statt helixabschnittförmiger Nuten Axialnuten vorgesehen sind. Zwischen diesen Axialnuten sind ebenfalls in axialer Richtung verlaufende Führungsflächen vorgesehen. Auch bei dieser Lösung kommt es zu relativ großen Haftreibungskräften, die die geschilderte nachteilige Wirkung großer Losbrechmomente mit sich bringen.

Zum weiteren Stand der Technik wird auf die Dokumente DE 100 04 178 A1, WO 2005/1241179 A1, WO 2004/038249 A1 und DE 102 45 027 A1 verwiesen. Bei diesen Dokumenten werden unter anderem mehrteilige oder als Federelemente ausgebildete Führungskörper verwendet, die aufgrund ihrer Komplexität zu verhältnismäßig kostenintensiven und daher für die Massenfertigung eher weniger attraktiven Anordnungen führen.

Aus dem Dokument WO 2009/050751 A1 ist ferner eine Bolzenführungseinrichtung bekannt, bei der eine Führungsbuchse einen Bolzen aufnimmt und an ihrer Führungsfläche mit mehreren Radialnuten zur Aufnahme von Schmiermittel ausgebildet ist.

Im Dokument DE 33 24 385 A1 ist eine Bolzenführungseinrichtung mit einer elastischen Buchse offenbart, die eine einen Führungsbolzen aufnehmende Lagerhülse umgibt. Dabei ist die elastische Buchse auf ihrer Innenseite mit Rippen ausgebildet, die der Aufnahme von Schmutz, Abrieb oder anderen Verunreinigungen dienen.

Aus dem Dokument WO 2010/054918 A1 ist ferner eine Führungsbuchse bekannt, die an ihrer Außenseite mehrere axial verlaufende Rippen umfasst, die unter Krafteinwirkung den Kontaktbereich zu einer Führungsfläche vergrößern können.

Es ist Aufgabe der vorliegenden Erfindung, eine Bolzenführungseinrichtung für eine Schwimmsattel-Scheibenbremse der eingangs bezeichneten Art sowie eine mit einer solchen Bolzenführungseinrichtung ausgebildete Schwimmsattel-Scheibenbremse bereitzustellen, die bei einfachem und kostengünstigem Aufbau dem vorstehend geschilderten Problem hoher Losbrechmomente wirkungsvoll begegnet.

Diese Aufgabe wird durch eine Bolzenführungseinrichtung gelöst, bei der vorgesehen ist, dass die Gleitbuchse der Gleitfläche zugewandt beidseits der Mitte der Gleitbuchse jeweils wenigstens eine Führungsfläche und beidseits der Mitte der Gleitbuchse jeweils wenigstens eine in Umfangsrichtung verlaufende Zwischenfläche aufweist, wobei die wenigstens eine Führungsfläche mit ihrem Durchmesser derart dimensioniert ist, dass sie in satter Anlage mit der Gleitfläche steht, und wobei die Zwischenfläche in ihrem Durchmesser derart dimensioniert ist, dass sie in unmittelbarer Anlage oder in geringem radialem Abstand zu der Gleitfläche vorgesehen ist.

Zur Vermeidung entsprechend hoher Losbrechmomente sieht die vorliegende Erfindung vor, dass die eigentliche bei normaler Funktionsweise führungsaktive Führungsfläche klein gehalten wird und sich an diese jeweils in Richtung zu der Mitte der Gleitbuchse hin wenigstens eine in Umfangsrichtung verlaufende Zwischenfläche anschließt. Derartige Zwischenflächen sind niveaumäßig "niedriger" als die Führungsflächen positioniert, d.h. die Zwischenflächen sind gegenüber den Führungsflächen hinsichtlich der Gleitfläche zurückgesetzt. Dabei ist vorgesehen sein, dass die Zwischenflächen in ihrem Durchmesser derart dimensioniert sind, dass sie in unmittelbarer Anlage oder in geringem radialem Abstand zu der Gleitfläche vorgesehen ist. Die Zwischenflächen sind dazu vorgesehen, um dann für eine unterstützende Abstützung und Führung zu sorgen, wenn die Anordnung starken Kräften ausgesetzt ist und die kleindimensionierten Führungsflächen unter diesen Kräften stark deformiert werden. In einem solchen Betriebszustand wirken die Zwischenflächen zusätzlich zu den Führungsflächen abstützend. Die zusätzliche Stützwirkung über die Zwischenflächen verhindert somit zuverlässig einen unerwünschten Kontakt und eine Führung über die metallische Oberfläche des Bolzens und die metallische Oberfläche der Aufnahmeöffnung im Bremsträger.

Eine Weiterbildung der Erfindung sieht in der Gleitbuchse zusätzlich wenigstens eine Ausnehmung oder Vertiefung zur Aufnahme von Schmiermitteln vor. Dadurch lässt sich noch besser der vorstehend geschilderte nachteilige Effekt durch Haftreibung bedingter hoher Haltekräfte vermeiden, der zu den vorstehend geschilderten unerwünschten hohen Losbrechmomenten bei einer Überwindung der durch die Haftreibung bedingten hohen Haltekräfte führt. Durch Vorsehen entsprechender Ausnehmungen oder Vertiefungen zur Aufnahme von Schmiermittel beidseits der Mitte der Gleitbuchse ist gewährleistet, dass in jeder Betriebssituation hinreichend Schmiermittel zur Verfügung steht, um auch bei längeren Betriebspausen eine einfache Betätigung unter Vermeidung von Losbrechmomenten vorzusehen.

Eine Weiterbildung der Erfindung sieht vor, dass die Gleitbuchse der Gleitfläche zugewandt ferner wenigstens eine Radialnut aufweist. Dabei ist es erfindungsgemäß ferner möglich, dass die wenigstens eine Radialnut zwischen den Führungsflächen und den Zwischenflächen angeordnet ist. Die Radialnut kann ein weiteres Fettreservoir bieten, welches eine Verteilung von Schmiermittel in Umfangsrichtung der Gleitbuchse erlaubt und dadurch die dauerhafte Schmierfähigkeit verbessert.

Eine Weiterbildung der Erfindung sieht vor, dass die Führungsflächen mit ihrem Durchmesser derart dimensioniert sind, dass sie in satter Anlage mit der Gleitfläche stehen. Dadurch ist gewährleistet, dass eine definierte Führung zwischen der Gleitbuchse und der Gleitfläche vorgesehen ist. Insbesondere kann in diesem Zusammenhang vorgesehen sein, dass zwischen den Führungsflächen und der Gleitfläche eine Übermaßpassung vorgesehen ist.

Erfindungsgemäß kann ferner vorgesehen sein, dass in der Zwischenfläche oder/und in der Führungsfläche wenigstens eine Ausnehmung oder Vertiefung zur Aufnahme von Schmiermittel vorgesehen ist. Dadurch ist gewährleistet, dass die Ausnehmungen oder Vertiefungen die Führungsflächen nicht schwächen, sondern in den an sich zur Abstützung und Führung nur ausnahmsweise aktiv werdenden Zwischenflächen Schmiermittel halten und zur Verfügung stellen.

Eine Weiterbildung der Erfindung sieht vor, dass der Übergang zwischen der Radialnut und wenigstens einer Zwischenfläche oder/und der Übergang zwischen wenigstens einer der Zwischenflächen und wenigstens einer der Führungsflächen konisch oder abgerundet ausgebildet ist. Gerundete oder konische Übergänge zwischen den jeweiligen Flächen und der Radialnut sorgen für ein besseres Gleitverhalten. Darüber hinaus ist die Bewegung zwischen der Gleitfläche und den Führungsflächen einfacher möglich und durch den keilförmig zulaufenden Spalt eine bessere Schmiermittelzufuhr gewährleistet.

Ferner kann erfindungsgemäß vorgesehen sein, dass die axialen Endabschnitte der Bolzenführungseinrichtung konisch oder gerundet ausgebildet sind. Auch dadurch wird eine Bewegung zwischen der Gleitbuchse und der diese führenden Gleitfläche erleichtert. Erfindungsgemäß ist ferner vorgesehen, dass die Gleitbuchse der Gleitfläche zugewandt wenigstens eine in Längsrichtung verlaufende Axialnut aufweist. Vorzugsweise sind mehrere Axialnuten in regelmäßigen Winkelabständen in der Gleitbuchse vorgesehen. Diese dienen zur Entlüftung sowie ebenfalls zum Halten von Schmiermittel. Insbesondere kann dabei vorgesehen sein, dass die wenigstens eine Axialnut einen in radialer Richtung größeren Zwischenraum mit der Gleitfläche begrenzt, als die wenigstens eine Radialnut.

Eine Weiterbildung der Erfindung sieht vor, dass die Gleitbuchse zur Befestigung an dem Führungsbolzen ausgebildet ist. Bei einer solchen Gestaltung weist die vorstehend beschriebene Kontur mit Radialnut und Führungsflächen sowie ggfs. mit Zwischenflächen und entsprechend konischen oder gerundeten Übergängen nach radial außen. Alternativ hierzu kann vorgesehen sein, dass die Gleitbuchse zur Befestigung an dem Bremsträger im Bereich der Aufnahmeöffnung ausgebildet ist. Bei einer solchen Gestaltung ist die Gleitbuchse gegenüber der vorstehend beschriebenen Ausführungsform sozusagen einwärts umgestülpt, so dass die Kontur nach radial innen weist. Bei der letztgenannten Gestaltung kann erfindungsgemäß vorgesehen sein, dass die Gleitbuchse einstückig mit einem Schutzbalg ausgebildet ist. In Abwandlung hierzu ist eine Bolzenführungseinrichtung möglich, bei der die Gleitbuchse ebenfalls am Bremsträger angebracht ist und der Gleitfläche zugewandt beidseits der Radialnut jeweils eine Führungsfläche aufweist, wobei in den Führungsflächen axiale Durchbrüche zur Entlüftung vorgesehen sind. Diese Variante dient jedoch lediglich zu Erläuterungszwecken und wird vorliegend nicht beansprucht.

Die Erfindung betrifft ferner eine Schwimmsattel-Scheibenbremse mit einer Bolzenführungseinrichtung der vorstehend beschriebenen Art.

Die Erfindung wird im Folgenden beispielhaft anhand der beiliegenden Figuren erläutert. Es stellen dar:
- Fig. 1: eine Teilschnittansicht zur Darstellung eines Führungsbolzens, der in einem Bremsträger aufgenommen ist;
- Fig. 2: eine perspektivische Ansicht des Führungsbolzens mit Gleitbuchse;
- Fig. 3: die Gleitbuchse in Einzelteildarstellung in perspektivischer Ansicht;
- Fig. 4: eine Seitenansicht der Führungsbuchse aus Fig. 3;
- Fig. 5: eine Ansicht entsprechend Fig. 1 einer alternativen Ausführungsform;
- Fig. 6: eine teilweise aufgeschnittene Ansicht eines kombinierten Bauteils aus Gleitbuchse und Balg für die Ausführungsform gemäß Fig. 5; und
- Fig. 7: das Bauteil gemäß Fig. 6 in perspektivischer Gesamtdarstellung.

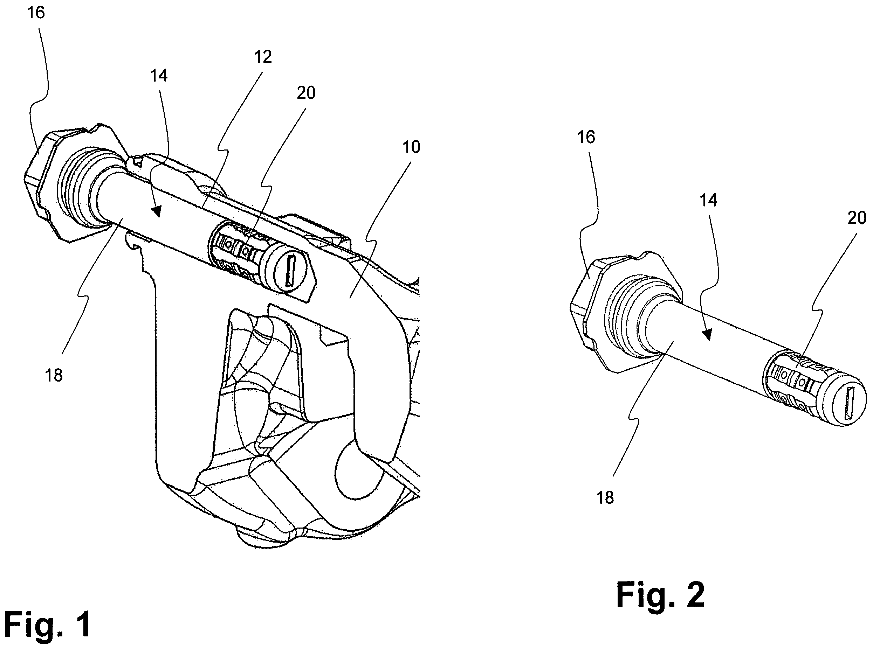

In Fig. 1 ist ein Bremsträger einer Schwimmsattelbremse in Teilschnittansicht gezeigt und allgemein mit 10 bezeichnet. Dieser umfasst eine Aufnahmeöffnung 12. In der Aufnahmeöffnung 12 ist ein Führungsbolzen 14 aufgenommen, der an seinem in Fig. 1 linken Ende einen Bolzenkopf 16 aufweist, mit dem er an einem nicht gezeigten Bremssattel fixiert ist. Ein Schaftabschnitt 18 des Führungsbolzens 14 ragt in die Aufnahmeöffnung 12 hinein. Nahe seinem freien Ende ist der Aufnahmebolzen 14 mit einem Abschnitt versehen, in dem eine Gleitbuchse 20 aufgenommen ist. Der Führungsbolzen 14 ist als Einzelteil sozusagen frei geschnitten nochmals in Fig. 2 dargestellt.

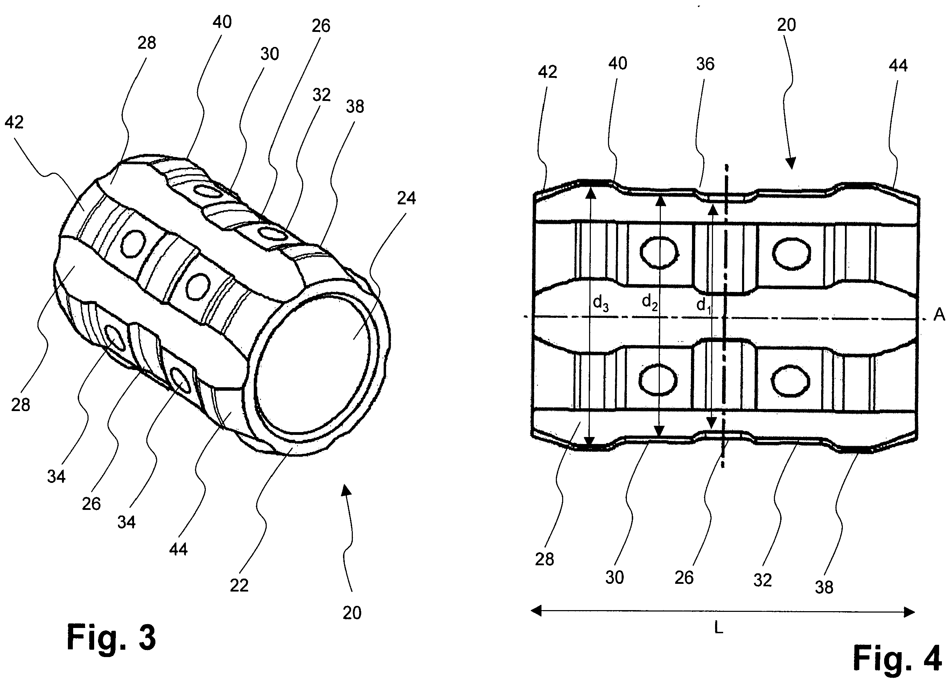

In Fig. 3 erkennt man die Führungsbuchse 20 in perspektivischer Einzelteildarstellung, wobei sie in Fig. 4 in der Seitenansicht gezeigt ist. In Fig. 3 und 4 erkennt man, dass die Gleitbuchse 20 aus einem rohrförmigen Kunststoffkörper 22 hergestellt ist, der eine zentrale Öffnung 24 aufweist, mit der sie auf einen durchmesserreduzierten Abschnitt des Führungsbolzens 14 aufsteckbar ist. Die Gleitbuchse 20 weist in ihrem mittleren Bereich eine in Umfangsrichtung verlaufende Radialnut 26 auf. Diese definiert einen Innendurchmesser d₁. In Richtung der Längsachse A erstrecken sich in regelmäßigen Winkelabschnitten Längsnuten 28 über die gesamte Länge L der Gleitbuchse 20. Die Längsnuten 28 sind derart tief in die Gleitbuchse 20 eingearbeitet, dass sie eine größere Tiefe aufweisen als die in Umfangsrichtung verlaufende Radialnut 26.

Beidseits der Radialnut 26 erstrecken sich Zwischenflächen 30 bzw. 32. Diese weisen radiale Vertiefungen 34 auf, die zur Aufnahme von Schmiermittel vorgesehen sind. Die Zwischenflächen 30, 32 definieren Abschnitte mit einem Durchmesser d₂. Der Übergang von der Radialnut 26 zu den Zwischenflächen 30 bzw. 32 verläuft über Rundungen bzw. konische Abschnitte 36. Weiter in Richtung der axialen Endabschnitte schließen sich an die Zwischenflächen 30, 32 Führungsflächen 38, 40 an. Diese Führungsflächen 38,40 definieren den maximalen Außendurchmesser d₃ der Gleitbuchse 20, der größer ist als der durch die Zwischenflächen 30, 32 definierte Durchmesser d₂. Wiederum verläuft der Übergang zwischen den Zwischenflächen 30, 32. und den Führungsflächen 38, 40 gerundet mit entsprechenden Rundungen 42 oder konisch. Axial außerhalb der Führungsflächen 38, 40 ist die Gleitbuchse 20 jeweils konisch zulaufend mit entsprechenden Konizitäten 42, 44 versehen.

Die Funktionsweise der Gleitbuchse 20 im Einbauzustand, wie in Fig. 1 gezeigt, ist wie folgt. Die Aufnahmeöffnung 12 des Bremsträgers 10 ist als Führungsfläche bzw. Gleitfläche ausgebildet. Sie ist dazu ausgebildet, dass die Gleitbuchse 20 daran abgleitet. In der Aufnahmeöffnung 12 ist Schmiermittel vorgesehen, das sich in der Radialnut 26, den Axialnuten 28, den Vertiefungen 34 sowie auch im Bereich der Zwischenflächen 30, 32 hält. Die Axialnuten 28 dienen als Entlüftungsbohrungen, um unmittelbar Druckschwankungen in den Bereichen beidseits der Gleitbuchse 20 entgegenzuwirken.

Im Normalbetrieb gleitet die Gleitbuchse 20 mittels ihrer Führungsflächen 38 und 40 auf der Gleitfläche der Aufnahmebohrung 12 ab. Dabei steht aufgrund der verschiedenen Bereiche zum Sammeln von Schmiermittel immer ausreichend Schmiermittel zur Verfügung, um eine Gleitbewegung auch nach längerem Fahrzeugstillstand zu ermöglichen. Trotz der verhältnismäßig begrenzten Anlageflächen zwischen der Aufnahmebohrung 12 und der Gleitbuchse 20 kann eine hinreichend gute Abstütz- und Führungswirkung erzielt werden. Große Losbrechmomente, wie sie eingangs mit Bezug auf den Stand der Technik beschrieben wurden, können so wirkungsvoll unterbunden werden. Im Falle verhältnismäßig großer Querkräfte, die zu einer starken Deformation der Führungsflächen 38, 40 führen, treten die Zwischenflächen 30, 32 stützend in Eingriff und sorgen vorübergehend für eine verhältnismäßig großflächige Abstützung und Führung der Gleitbuchse 20 in der Aufnahmeöffnung 12. Dadurch können durch entsprechend große Kräfte bedingte etwaige Zerstörungen an den Führungsflächen 38 aufgrund zu starker Deformation verhindert werden. Die Zwischenflächen 30, 32 wirken sozusagen als Absicherung, wobei deren führende Anlage an der Aufnahmebohrung 12 wegen der an den Zwischenflächen 32,34 vorgesehenen Ausnehmungen 34 unter starker Einbindung von Schmiermittel erfolgt.

Es sei angemerkt, dass der Außendurchmesser d₃ im Bereich der Führungsflächen 38,40 derart dimensioniert ist, dass diese im Übermaß in die Aufnahmeöffnung 12 eingesetzt werden und so satt in der Aufnahmeöffnung 12 anliegen. Dadurch ist für die übliche Betriebsweise eine sichere Anlage gewährleistet. Dennoch lässt sich im Falle einer Bremsung, nicht zuletzt auch wegen des dauerhaft vorhandenen und im Bereich der Gleitbuchse 20 gehaltenen Schmiermittels eine Verlagerung des Bremssattels ohne größeren Widerstand erreichen. Sowohl hohe Losbrechmomente, die sich insbesondere nach längerem Fahrzeugstillstand ergeben, als auch die bei Gleitreibung im Stand der Technik auftretenden slip-stick-Effekte, sozusagen eine rüttelnde oder ruckartige Bewegung des Bremssattels und der daran angebrachten Führungsbolzen 14, lassen sich mit einer derartigen Struktur wirkungsvoll unterbinden.

Die Zwischenflächen 30, 32, die bei einer starken Belastung durch entsprechende Querkräfte oder Kippkräfte Tragwirkung entfalten, sorgen auch dafür, dass es zu keinem Führungskontakt zwischen den metallischen Abschnitten des Führungsbolzens 14 und der Aufnahmeöffnung 12 kommt. Ergänzend sei angemerkt, dass die gerundeten oder konischen Übergänge 36, 42 für eine Keil-Spalt-Wirkung und eine hinreichende, jedoch nicht übertriebene Schmiermittelzufuhr zu den Führungsflächen 38, 40 sorgen.

Insgesamt ergeben sich mit dem gezeigten Aufbau der Gleitbuchse 20 vielfältige Vorteile bei der Führung des Bremssattels, ohne aufwändige mehrteilige Anordnungen vorzusehen, wie sie aus dem Stand der Technik bekannt sind.

Als alternative, nicht gezeigte Ausführungsform ist es auch möglich, eine Gleitbuchse mit einer Kontur entsprechend der Kontur der Gleitbuchse 20, wie insbesondere in Fig. 3 und 4 dargestellt, sozusagen umzustülpen und die Gleitbuchse derart auszubilden, dass deren Kontur radial einwärts weist. Dies würde bedeuten, dass eine derart umgestülpte Gleitbuchse fest an dem Bremsträger 10 in einer entsprechenden Aufnahme fixiert ist und die Gleitfläche von dem Führungsbolzen 14 gebildet werden würde. An der Führungskontur mit den entsprechenden Axialnuten und der Radialnut würde sich dann allerdings nichts ändern. Die Führungsflächen würden bei einer solchen umgestülpten Gleitbuchse entsprechend weit nach radial einwärts ragen und hätten den geringsten Durchmesser gefolgt von dem Durchmesser der radial weiter auswärts angeordneten Zwischenflächen und dem größten Durchmesser im Bereich der Umfangsnut.

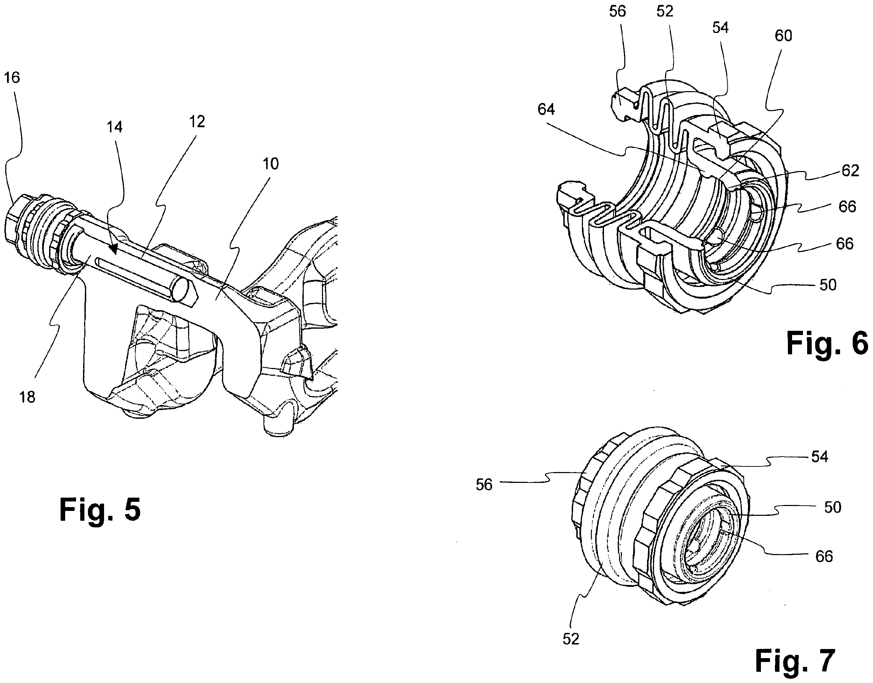

Fig. 5 bis 7 zeigen eine ähnliche Anordnung, bei der der Führungsbolzen 14 in einer Gleitbuchse 50 geführt ist, die unmittelbar an dem Bremsträger 10 angebracht ist. Die Gleitbuchse 50 ist integral mit einem Schutzbalg 52 ausgebildet, der über entsprechende Rastmittel 54, 56 einenends mit dem Bremsträger 10 und anderenends mit dem Bremssattel oder dem Führungsbolzen 14 verrastbar ist.

Die Gleitbuchse 50 ist in einer entsprechenden Durchmessererweiterung 58 im Bremsträger 10 aufgenommen. Sie weist eine Innenumfangsfläche auf mit einer in Umfangsrichtung verlaufenden Radialnut 60, von der beidseits zwei radial einwärts vorspringende Führungsrippen 62, 64 angeordnet sind. Diese sind lokal unterbrochen von Axialnuten 66, um eine Druckentlastung zu schaffen. In der in Umfangsrichtung verlaufenden Radialnut sammelt sich Schmiermittel, welches durch die gerundet ausgebildeten Übergänge von der Radialnut 60 zu den Führungsflächen der Führungsrippen 62, 64 fließen kann.

Auch mit der Anordnung gemäß Fig. 5 bis 7 lässt sich eine entsprechende Funktionsweise, wie sie vorstehend beschrieben ist, weitgehend erreichen.

## Patentansprüche

1. Bolzenführungseinrichtung für eine Schwimmsattel-Scheibenbremse mit wenigstens einem in einem Bremsträger gelagerten Führungsbolzen (14), der an einem Bremssattel (10) angebracht ist, wobei der Bremssattel (10) über den Führungsbolzen (14) in dessen Achsrichtung (A) verlagerbar geführt ist, wobei die Bolzenführungseinrichtung zwischen einer Innenumfangsfläche einer Aufnahmeöffnung (12) des Bremsträgers (10) und einer Außenumfangsfläche des darin aufgenommenen Führungsbolzens (14) angeordnet ist, wobei die Bolzenführungseinrichtung eine Gleitbuchse (20) umfasst, wobei eine Fläche von Innenumfangsfläche und Außenumfangsfläche als Haltefläche wirkt, an der die Gleitbuchse (20) gehalten ist, und wobei die andere Fläche von Innenumfangsfläche und Außenumfangsfläche als Gleitfläche (12) wirkt, an der die Gleitbuchse (20) abgleitet,
**dadurch gekennzeichnet, dass** die Gleitbuchse (20) der Gleitfläche (12) zugewandt aufweist:
- beidseits der Mitte der Gleitbuchse (20) jeweils wenigstens eine Führungsfläche (38, 40) und
- beidseits der Mitte der Gleitbuchse (20) jeweils wenigstens eine in Umfangsrichtung verlaufende Zwischenfläche (30, 32),
wobei die wenigstens eine Führungsfläche (38, 40) mit ihrem Durchmesser derart dimensioniert ist, dass sie in satter Anlage mit der Gleitfläche steht, und
wobei die Zwischenfläche (30, 32) in ihrem Durchmesser (d₂) derart dimensioniert ist, dass sie in unmittelbarer Anlage oder in geringem radialem Abstand zu der Gleitfläche (12) vorgesehen ist, und wobei die Zwischenflächen (30, 32) dazu ausgebildet sind, bei einer Deformation der Führungsflächen (38, 40) stützend in Eingriff mit der Gleitfläche (12) zu treten.

2. Bolzenführungseinrichtung nach Anspruch 1,
**dadurch gekennzeichnet, dass** zwischen den Führungsflächen (38, 40) und der Gleitfläche (12) eine Übermaßpassung vorgesehen ist.

3. Bolzenführungseinrichtung nach Anspruch 1 oder 2,
**dadurch gekennzeichnet, dass** sich die zumindest eine Zwischenfläche (30, 32) unmittelbar an die wenigstens eine Führungsfläche (38, 40) anschließt.

4. Bolzenführungseinrichtung nach einem der vorangehenden Ansprüche,
**dadurch gekennzeichnet, dass** in der Zwischenfläche (30, 32) oder/und in der Führungsfläche (38, 40) wenigstens eine Ausnehmung oder Vertiefung (34) zur Aufnahme von Schmiermittel vorgesehen ist.

5. Bolzenführungseinrichtung nach einem der vorangehenden Ansprüche,
**dadurch gekennzeichnet, dass** die Gleitbuchse (20) der Gleitfläche (12) zugewandt ferner wenigstens eine Radialnut (26) aufweist.

6. Bolzenführungseinrichtung nach Anspruch 5,
**dadurch gekennzeichnet, dass** die wenigstens eine Radialnut (26) zwischen den Führungsflächen in (38,40) und den Zwischenflächen (30,32) angeordnet ist.

7. Bolzenführungseinrichtung nach Anspruch 5 oder 6,
**dadurch gekennzeichnet, dass** der Übergang (36) zwischen der Radialnut (26) und wenigstens einer Zwischenfläche (30, 32) oder/und der Übergang (40) zwischen wenigstens einer der Zwischenflächen (30, 32) und wenigstens einer der Führungsflächen (38, 40) konisch oder abgerundet ausgebildet ist.

8. Bolzenführungseinrichtung nach einem der vorangehenden Ansprüche,
**dadurch gekennzeichnet, dass** axiale Endabschnitte (42, 44) der Gleitbuchse (20) konisch oder gerundet ausgebildet sind.

9. Bolzenführungseinrichtung nach einem der vorangehenden Ansprüche,
**dadurch gekennzeichnet, dass** die Gleitbuchse (20) der Gleitfläche (12) zugewandt wenigstens eine in Längsrichtung verlaufende Axialnut (28) aufweist.

10. Bolzenführungseinrichtung nach Anspruch 9,
**dadurch gekennzeichnet, dass** sich die wenigstens eine Axialnut (28) über die gesamte Länge der Gleitbuchse (20) erstreckt.

11. Bolzenführungseinrichtung nach Anspruch 9 oder 10,
**dadurch gekennzeichnet, dass** die wenigstens eine Axialnut (28) einen in radialer Richtung größeren Zwischenraum mit der Gleitfläche (12) begrenzt, als die wenigstens eine Radialnut (26).

12. Bolzenführungseinrichtung nach einem der vorangehenden Ansprüche,
**dadurch gekennzeichnet, dass** die Gleitbuchse (20) zur Befestigung an dem Führungsbolzen (14) ausgebildet ist.

13. Bolzenführungseinrichtung nach einem der vorangehenden Ansprüche,
**dadurch gekennzeichnet, dass** die Gleitbuchse (20) zur Befestigung an dem Bremsträger (10) ausgebildet ist.

14. Bolzenführungseinrichtung nach Anspruch 13,
**dadurch gekennzeichnet, dass** die Gleitbuchse (50) einstückig mit einem Schutzbalg (52) ausgebildet ist.

15. Schwimmsattel-Scheibenbremse mit wenigstens einem an einem Bremssattel angebrachten Führungsbolzen (14), der gegenüber einem Bremsträger (10) in Achsrichtung (A) des Führungsbolzens (14) verlagerbar geführt ist, wobei die Schwimmsattel-Scheibenbremse mit einer Bolzenführungseinrichtung nach einem der vorangehenden Ansprüche ausgebildet ist, wobei die Bolzenführungseinrichtung zwischen einer Innenumfangsfläche einer Aufnahmeöffnung des Bremsträgers (10) und einer Außenumfangsfläche des darin aufgenommenen Führungsbolzens (14) angeordnet ist, wobei die Bolzenführungseinrichtung eine Gleitbuchse (20) umfasst, wobei eine Fläche von Innenumfangsfläche und Außenumfangsfläche als Haltefläche wirkt, an der die Gleitbuchse (20) gehalten ist, und wobei die andere Fläche von Innenumfangsfläche und Außenumfangsfläche als Gleitfläche (12) wirkt, an der die Gleitbuchse (20) abgleitet.

## Claims

1. Bolt guiding device for a floating caliper disc brake, having at least one guide bolt (14) that is supported in a brake carrier and mounted on a brake caliper (10), wherein the brake caliper (10) is movably guided over the guide bolt (14) in the axial direction (A) thereof, wherein the bolt guiding device is disposed between an inner circumferential surface of a location hole (12) of the brake carrier (10) and an outer circumferential surface of the guide bolt (14) accommodated therein, wherein the bolt guiding device comprises a slide bush (20), wherein one surface of the inner circumferential surface and outer circumferential surface acts as a retaining surface on which the slide bush (20) is retained, and wherein the other surface of the inner circumferential surface and outer circumferential surface acts as a sliding surface (12) on which the slide bush (20) slides,
**characterized in that** the slide bush (20) has, facing the sliding surface (12):
- at least one guiding surface (38, 40) on each side of the centre of the slide bush (20) and
- at least one intermediate surface (30, 32) extending in the circumferential direction on each side of the centre of the slide bush (20),
wherein the diameter of the at least one guiding surface (38, 40) is dimensioned in such a way that said guiding surface is in close contact with the sliding surface, and
wherein the diameter (d₂) of the intermediate surface (30, 32) is dimensioned in such a way that said intermediate surface is provided in direct contact with or with a slight radial spacing from the sliding surface (12), and wherein the intermediate surfaces (30, 32) are configured to come into supportive action with the sliding surface (12) in the event of a deformation of the guiding surfaces (38, 40).

2. Bolt guiding device according to claim 1,
**characterized in that** between the guiding surfaces (38, 40) and the sliding surface (12) an interference fit is provided.

3. Bolt guiding device according to claim 1 or 2,
**characterized in that** the at least one intermediate surface (30, 32) directly adjoins the at least one guiding surface (38, 40).

4. Bolt guiding device according to one of the preceding claims,
**characterized in that** provided in the intermediate surface (30, 32) or/and in the guiding surface (38, 40) is at least one recess or indentation (34) for receiving lubricant.

5. Bolt guiding device according to one of the preceding claims,
**characterized in that** the slide bush (20) further has, facing the sliding surface (12), at least one radial groove (26).

6. Bolt guiding device according to claim 5,
**characterized in that** the at least one radial groove (26) is disposed between the guiding surface (38, 40) and the intermediate surfaces (30, 32).

7. Bolt guiding device according to claim 5 or 6,
**characterized in that** the transition (36) between the radial groove (26) and at least one intermediate surface (30, 32) or/and the transition (40) between at least one of the intermediate surfaces (30, 32) and at least one of the guiding surfaces (38, 40) is of a conical or rounded configuration.

8. Bolt guiding device according to one of the preceding claims,
**characterized in that** axial end portions (42, 44) of the slide bush (20) are of a conical or rounded configuration.

9. Bolt guiding device according to one of the preceding claims,
**characterized in that** the slide bush (20) has, facing the sliding surface (12), at least one axial groove (28) extending in longitudinal direction.

10. Bolt guiding device according to claim 9,
**characterized in that** the at least one axial groove (28) extends over the entire length of the slide bush (20).

11. Bolt guiding device according to claim 9 or 10,
**characterized in that** the at least one axial groove (28) together with the sliding surface (12) delimits a clearance that is greater in radial direction than the at least one radial groove (26).

12. Bolt guiding device according to one of the preceding claims,
**characterized in that** the slide bush (20) is configured for fastening to the guide bolt (14).

13. Bolt guiding device according to one of the preceding claims,
**characterized in that** the slide bush (20) is configured for fastening to the brake carrier (10).

14. Bolt guiding device according to claim 13,
**characterized in that** the slide bush (50) is formed integrally with a protective gaiter (52).

15. Floating caliper disc brake having at least one guide bolt (14) that is mounted on a brake caliper and movably guided relative to a brake carrier (10) in axial direction (A) of the guide bolt (14), wherein the floating caliper disc brake is configured with a bolt guiding device according to one of the preceding claims, wherein the bolt guiding device is disposed between an inner circumferential surface of a location hole of the brake carrier (10) and an outer circumferential surface of the guide bolt (14) accommodated therein, wherein the bolt guiding device comprises a slide bush (20), wherein one surface of the inner circumferential surface and outer circumferential surface acts as a retaining surface on which the slide bush (20) is retained, and wherein the other surface of the inner circumferential surface and outer circumferential surface acts as a sliding surface (12) on which the slide bush (20) slides.

## Revendications

1. Dispositif de guidage à broche pour un frein à disque à étrier flottant, comprenant au moins une broche de guidage (14) logée dans un support de frein et montée sur un étrier de frein (10), cet étrier de frein (10) étant guidé de manière déplaçable sur la broche de guidage (14) dans la direction axiale (A) de celle-ci, le dispositif de guidage à broche étant disposé entre une surface périphérique interne d'une ouverture de logement (12) du support de frein (10) et une surface périphérique externe de la broche de guidage qui y est logée, le dispositif de guidage à broche comprenant une douille de glissement (20), une surface sur la surface périphérique interne et sur la surface périphérique externe agissant comme une surface de retenue sur laquelle est retenue ladite douille de glissement (20), et l'autre surface sur la surface périphérique interne et sur la surface périphérique externe agissant comme une surface de glissement (12) sur laquelle glisse la douille de glissement (20),
**caractérisé en ce que** la douille de glissement (20) présente, tournés vers la surface de glissement (12) :
- de part et d'autre du centre de la douille de glissement (20), respectivement au moins une surface de guidage (38, 40) et
de part et d'autre du centre de la douille de glissement (20), respectivement au moins une surface intermédiaire (30, 32) s'étendant dans la direction périphérique, ladite au moins une surface de guidage (38, 40) étant dimensionnée de manière à définir un diamètre qui la fait être en contact étroit avec la surface de glissement ou se trouver à une faible distance radiale de celle-ci, et les surfaces intermédiaires (30, 32) étant conçues de manière à servir d'appui et à venir en prise avec la surface de glissement (12) en cas de déformation des surfaces de guidage (38, 40).

2. Dispositif de guidage à broche selon la revendication 1,
**caractérisé en ce qu'**il est prévu un ajustement par surdimensionnement entre les surfaces de guidage (38, 40) et la surface de glissement (12).

3. Dispositif de guidage à broche selon la revendication 1 ou 2,
**caractérisé en ce que** ladite au moins une surface intermédiaire (30, 32) est directement adjacente à ladite au moins une surface de guidage (38, 40).

4. Dispositif de guidage à broche selon l'une des revendications précédentes,
**caractérisé en ce qu'**au moins un évidement ou un creux (34) appelé à recevoir un lubrifiant est prévu dans la surface intermédiaire (30, 32) ou/et dans la surface de guidage (38, 40).

5. Dispositif de guidage à broche selon l'une des revendications précédentes,
**caractérisé en ce que** la douille de glissement (20), qui est tournée vers la surface de glissement (12), présente en outre au moins une gorge radiale (26).

6. Dispositif de guidage à broche selon la revendication 5,
**caractérisé en ce que** ladite au moins une gorge radiale (26) est disposée entre les surfaces de guidage (38, 40) et les surfaces intermédiaires (30, 32).

7. Dispositif de guidage à broche selon la revendication 5 ou 6,
**caractérisé en ce que** la transition (36) entre la gorge radiale (26) et au moins une surface intermédiaire (30, 32) ou/et la transition (40) entre au moins une des surfaces intermédiaires (30, 32) et au moins une des surfaces de guidage (38, 40) présente une forme conique ou arrondie.

8. Dispositif de guidage à broche selon l'une des revendications précédentes,
**caractérisé en ce que** les extrémités axiales (42, 44) de la douille de glissement (20) présentent une forme conique ou arrondie.

9. Dispositif de guidage à broche selon l'une des revendications précédentes,
**caractérisé en ce que** la douille de glissement (20), qui est tournée vers la surface de glissement (12), présente au moins une gorge axiale (28) s'étendant dans la direction longitudinale.

10. Dispositif de guidage à broche selon la revendication 9,
**caractérisé en ce que** ladite au moins une gorge axiale (28) s'étend sur toute la longueur de la douille de glissement (20).

11. Dispositif de guidage à broche selon la revendication 9 ou 10,
**caractérisé en ce que** ladite au moins une gorge axiale (28) délimite avec la surface de glissement (12) un espace plus grand dans la direction radiale que ladite au moins une gorge radiale (26).

12. Dispositif de guidage à broche selon l'une des revendications précédentes,
**caractérisé en ce que** la douille de glissement (20) est conçue pour être fixée à la broche de guidage (14).

13. Dispositif de guidage à broche selon l'une des revendications précédentes,
**caractérisé en ce que** la douille de glissement (20) est conçue pour être fixée au support de frein (10).

14. Dispositif de guidage à broche selon la revendication 13,
**caractérisé en ce que** la douille de glissement (20) est conçue d'un seul tenant avec un soufflet de protection (52).

15. Frein à disque à étrier flottant comprenant au moins une broche de guidage (14) montée sur un étrier de frein et guidée de manière déplaçable dans la direction axiale (A) de la broche de guidage (14) par rapport au support de frein (10), le frein à disque à étrier flottant étant réalisé pourvu d'un dispositif de guidage à broche selon l'une des revendications précédentes, le dispositif de guidage à broche étant agencé entre une surface périphérique interne d'une ouverture de logement (12) du support de frein (10) et une surface périphérique externe de la broche de guidage qui y est logée, le dispositif de guidage à broche comprenant une douille de glissement (20), une surface sur la surface périphérique interne et sur la surface périphérique externe agissant comme une surface de retenue sur laquelle est retenue la douille de glissement (20), et l'autre surface sur la surface périphérique interne et sur la surface périphérique externe agissant comme une surface de glissement (12) sur laquelle glisse la douille de glissement (20).
